# EUROPEAN PATENT APPLICATION

(11) **EP 0 602 743 A1**
(43) Date of publication of application: **22.06.1994**
(21) Application number: 93203521.5
(22) Date of filing: 14.12.1993
(51) Int. Cl.: E04H 12/10, E04H 12/24

(54) **Cable mast and a traverse for same**

(30) Priority: 15.12.1992 NL 9202170
(71) Applicant: N.V. Kema, NL-6812 AR Arnhem (NL)
(72) Inventor: Ploeg, Teunis Johannes, NL-6865 CV Doorwerth (NL); Semplonius, Henk, NL-6957 AN Laag Soeren (NL)
(74) Representative: Prins, Hendrik Willem

(57) **Abstract**

The invention relates to a cable mast (115) comprising a mast to be placed on a base structure and at least one traverse (116-118) supported by the mast for suspending high-voltage cables therefrom, wherein the rising mast elements (111-114) consist of tubular section and are internally stabilized with stabilizing elements, wherein the stabilizing elements preferably comprise meander stabilizing elements snaking upward in each case between two mutually adjoining mast elements, or the stabilizing elements are arranged in the shape of a cross running outward from a cross piece between two mast elements and the cross piece is connected to a torsion bracing, or stabilizing elements converge between two mast elements to a cross beam arranged between the two mast elements. The invention further relates to a traverse for a cable mast.

## Description

The present invention relates to a cable mast, such as an electricity pylon, and to a traverse therefor. The present invention relates more particularly to a cable mast which has lower service costs and a smaller environmental impact.

A known cable mast comprises mast elements made of angle profile which due to its angled form is difficult to preserve and therefore requires much maintenance. The strength of angle profiles is moreover such that the mast elements must be provided with a large number of shores or bend shorteners. Such a so-called lattice mast requires much maintenance and as a result of galvanized coating being washed off the environmental impact is relatively great.

The invention has for its object to provide a cable mast which substantially does not possess the above drawbacks.

This is achieved with a cable mast according to the invention which comprises a mast to be placed on a base structure and at least one traverse supported by the mast for suspending high-voltage cables therefrom, wherein the rising mast elements consist of tubular section and are internally stabilized with stabilizing elements. Because the mast elements are manufactured from tubular section with a evenly formed outer surface, such tubular sections are easy to coat. Because these tubular sections moreover possess a greater strength, in particular an enhanced bending behaviour, bend shorteners can substantially be dispensed with and the number of joints is also reduced. For absorption and conduction of the loads the cable mast according to the invention must however be provided internally with tubular diagonals and/or be stabilized internally.

According to a first embodiment a cable mast according to the invention comprises meander stabilizing elements snaking upward in each case between two mutually adjoining mast elements, wherein preferably the bottom meander stabilizing element engages onto a torsion bracing coupling the mast elements. With such a so-called meander mast a reduction of the surface area (about 478 m²) is obtained compared to the known 380/110 kV lattice mast (about 990 m²).

According to another embodiment the cable mast according to the invention comprises stabilizing elements which are arranged in the shape of a cross running outward from a cross piece between two mast elements and the cross piece is connected to a torsion bracing. With this embodiment the surface area for a 380/110 kV mast is reduced to about 516 m².

According to another embodiment the cable mast according to the invention comprises stabilizing elements which converge between two mast elements to a cross beam arranged between the two mast elements. With this embodiment the surface area is reduced to about 630 m².

According to another embodiment mast elements are mutually connected by a torsion bracing comprising a cross beam and the stabilizing elements are connected to adjoining cross beams. In this case the surface area amounts to about 700 m².

According to the above described embodiments the cable masts according to the invention can comprise two or four mast elements. In the case of two mast elements the lateral stability transversely of the traverse is substantially obtained by a good foundation and the tensile load by the wires hanging thereon, such as high-voltage cables and lightning conductors.

According to another embodiment the cable mast according to the invention comprises mast elements which comprise two foundation mast elements and a floating mast element which support via shoring elements, and stabilizing elements which are connected between two torsion bracings to a foundation mast element and a floating mast element. This embodiment has a very remarkable and aesthetic appearance.

For a further reduction in the surface area for maintaining it is further recommended that in accordance with a first embodiment a traverse comprises two tubular traverse girders, and in accordance with another embodiment the traverse comprises a tubular traverse girder.

The cable masts according to the invention are generally free of climbing devices but service and inspection can take place using a chair lift which can be fixed for sideways sliding to the traverse. Optionally the traverse can also be provided with a walkway.

According to a further aspect of the invention the traverse consists of one or two tubular traverse girders which are fixed to the mast elements.

Mentioned and other features of the cable mast and the traverse according to the invention will be further elucidated hereinbelow in the light of a number of embodiments given only by way of example, while reference is made to the annexed drawing.

In the drawing:

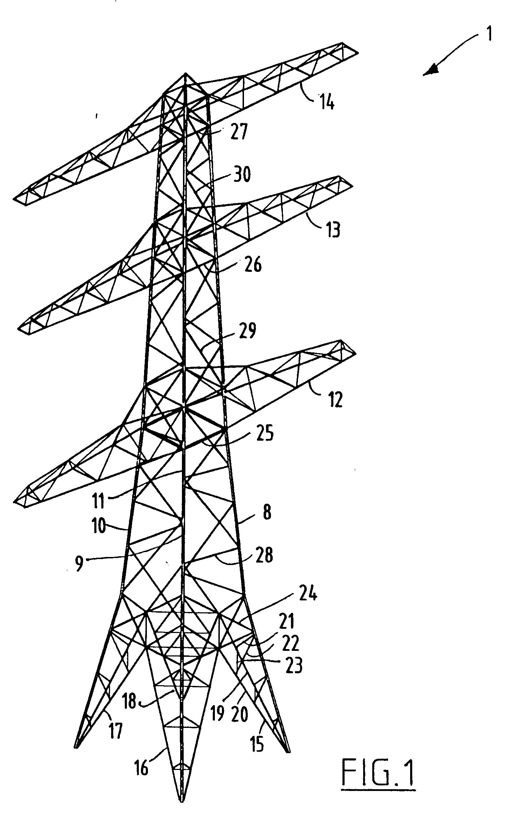

figures 1-8 each show a perspective view of a cable mast according to the invention.

Figure 1 shows a 380/110 kV cable mast 1 according to the invention. The mast is constructed from four mast elements 8-11 and three traverses 12-14. The mast elements are manufactured from tubular section of 220 mm square up to the traverse 12, of 180 mm square up to the traverse 13 and 120 mm square up to the top. Mast elements 8-11 each form a leg 15-18 with edge elements 19-20 and shores 21-23. The edge elements 19-20 are connected to a traverse platform 24. Torsion bracings 25-27 are also situated at the level of traverses 12-14. Meander stabilizing elements 28-30 are arranged snaking upward in each case between two mutually adjoining mast elements 8 and 9. The number of components amounts to 478, the number of connections to 846 and the weight to 35,600 kg.

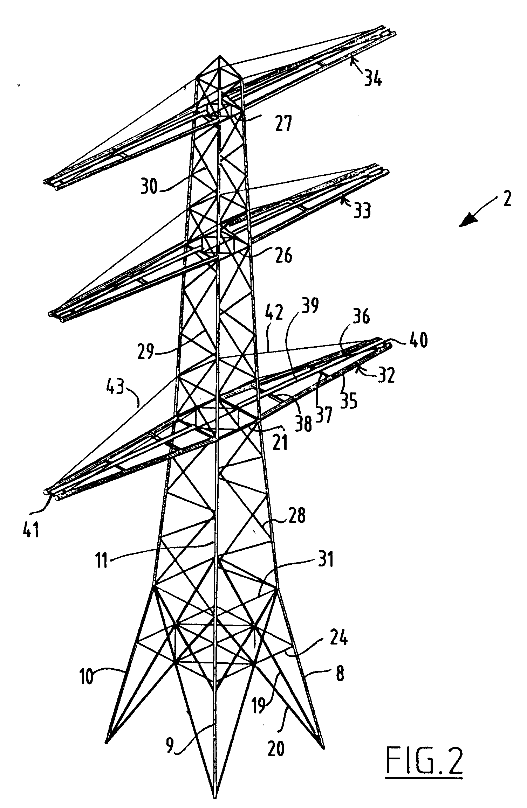

In the cable mast 2 according to figure 2 the edge elements 19 extend as far as an intermediate platform 31 and likewise consist of tubular section (diameter 355 mm, 244 mm and 152 mm respectively), whereby the shores 21-23 can also be dispensed with.

The traverses 32-34 consist of two tubular traverse girders 35 and 36 held at a mutual distance by cross pieces 37 and 38 on which rests a walkway. Stabilizing elements 42 and 43 are connected to the ends 40 and 41 of the traverse.

The number of components amounts to 344, the number of connections to 585 and the weight to 39,400 kg.

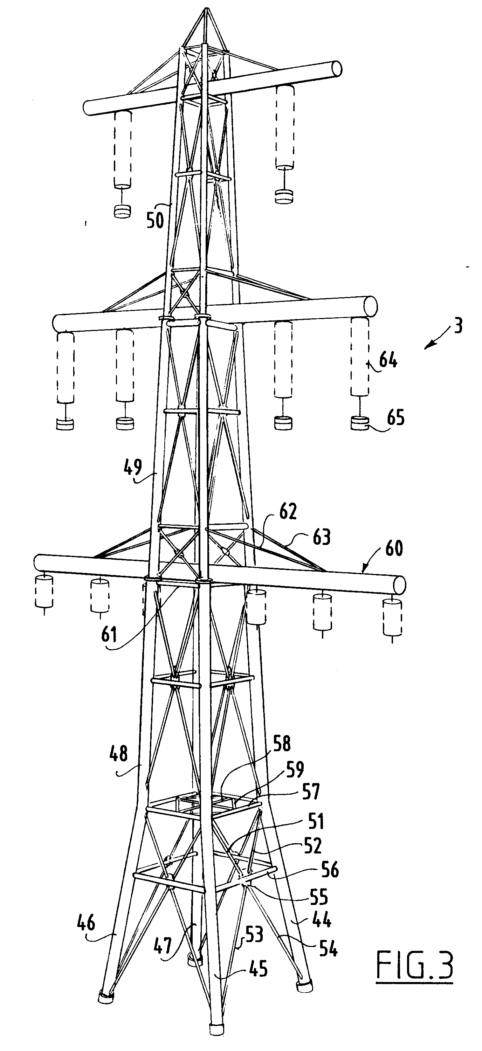

Figure 3 shows a cable mast 3 according to the invention wherein the four legs of the mast 3 are formed only by the tubular mast elements 44-47 which are each divided into three sections 48-50 (diameter dimensions 356 mm, 216 mm and 193 mm). Stabilizing elements 51-54 are arranged in the shape of a cross running outward from a cross piece, in each case between two mast elements 44 and 45. The cross piece 55 is connected to a torsion bracing 56. The stabilizing elements 51-54 are all under tension. The stabilizing elements 51 and 52 end at the height of a torsion bracing 57 which is provided with internal stabilizing elements 58 and 59. Traverse 60 is a single tubular section resting in a torsion bracing 61 and is further connected to the mast elements 44 and 45 via stabilizing elements 62 and 63. Suspended from the traverse 60 is an insulator 64 which is joined via a connecting element 65 to a high-voltage cable to be suspended thereon.

The number of components amounts to 220, the number of connections to 458 and the weight to 36,880 kg.

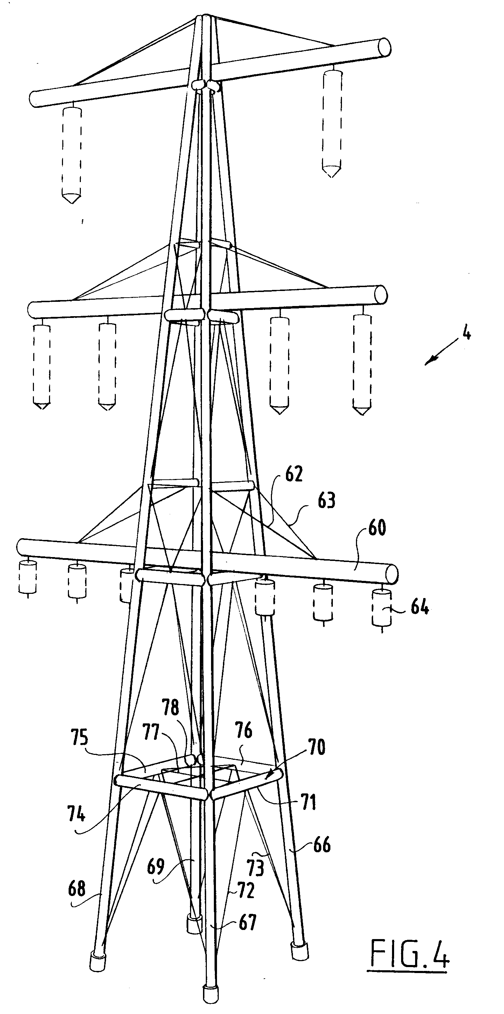

The cable mast 4 according to the invention shown in figure 4 once again comprises four mast elements 66-69 of tubular section (diameter 356 mm) and a number of torsion bracings 70 formed from cross beams 71 arranged between two mast elements 66-67.

Stabilizing elements 72 and 73 are under tensile strain and are connected to a mast element 66, 67 and on the other side to the centre of a cross beam 71. Stabilizing elements 77, 78 are arranged between adjoining cross beams 71, 74-76.

The number of components amounts to 95, the number of connections to 194 and the weight to 41,475 kg.

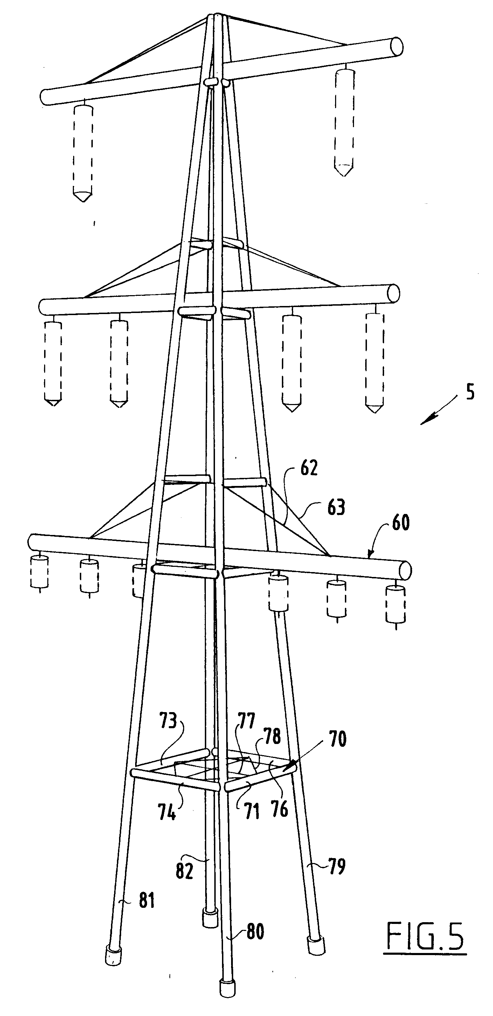

In the cable mast 5 shown in figure 5 only the torsion bracings 70 are now retained, with therebetween the transverse and lateral stabilizing elements 77, 78 respectively. The diameter dimension of the mast elements 79-82 is 508 mm, the number of components amounts to 55, the number of connections to 114 and the weight to 58,400 kg.

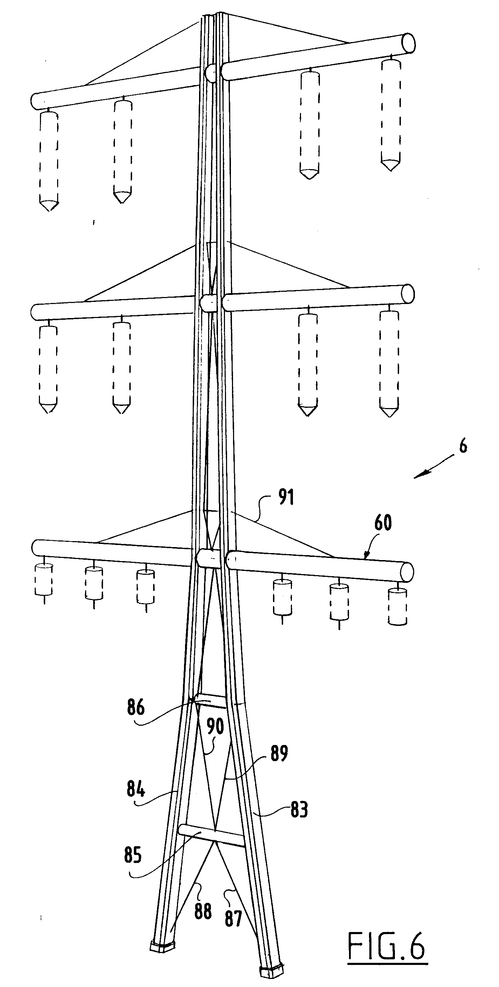

In the cable mast 6 according to figure 6 the two mast elements 83 and 84 consist of a profile that is oval-shaped in section and bent (largest dimension 1200 mm, smallest dimension 600 mm) having cross beams 85, 86 therebetween. Cross beam 85 is joined to the mast elements 83 and 84 via stabilizing elements 87 and 88 and 89 and 90. The tubular traverse 60 is provided with only one stabilizing element 91. The number of components amounts to 88, the number of connections to 74 and the weight to 56,025 kg.

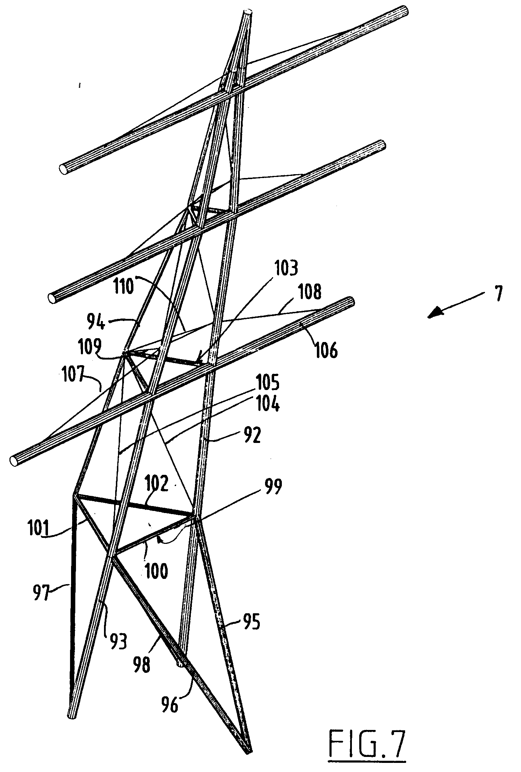

Figure 7 shows a cable mast 7 according to the invention of exceptionally aesthetic form. Cable mast 7 comprises two foundation mast elements 92 and 93 (diameter 609 mm) and a floating mast element 94 (diameter 298 mm). Mast elements 92 and 93 support via the shores 95 and 96 and the mast element 94 supports via shores 97 and 98. A torsion bracing 99 consists of cross beams 100-102. Stabilizing elements 104 and 105 are arranged between two torsion bracings 99 and 103. A tubular traverse 106 is suspended via stabilizing elements 107 and 108.

Stabilizing elements 109, 110 are further arranged at the height of the torsion bracing 103 between the foundation mast elements 92 and 93 and the floating mast element 94.

The number of components amounts to 38, the number of connections to 93 and the weight to 42,350 kg.

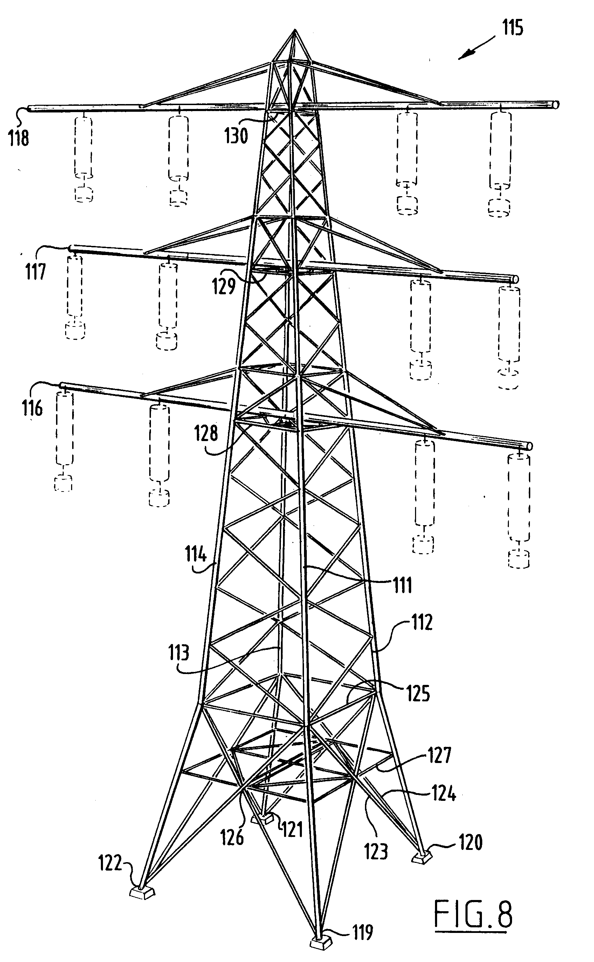

Finally, figure 8 shows a cable mast 115 according to the invention which is constructed from four mast elements 111-114 manufactured from a tubular section with a diameter of about 320 mm up to the traverse 116, with a diameter of 219 mm up to traverse 117 and a diameter of 139 mm up to traverse 118.

The cable mast 115 comprises four legs 119-122 which are assembled from a mast element and two edge elements 123 and 124 which extend as far as the first intermediate platform 125. At the height of crossing edge elements 123 and 124 is situated a junction 126 which, with the other three junctions, forms part of the traverse platform 127.

Torsion bracings 128, 129 and 130 are likewise situated at the height of the traverses 116, 117 and 118.

The traverses 116, 117 and 118 have a construction corresponding with the traverses of figures 3-6.

It will be apparent that for types of mast other than the described 380/110 kV mast equivalent advantages are obtained.

## Claims

1. Cable mast comprising a mast to be placed on a base structure and at least one traverse supported by the mast for suspending high-voltage cables therefrom, wherein the rising mast elements consist of tubular section and are internally stabilized with stabilizing elements.

2. Mast as claimed in claim 1, wherein the stabilizing elements comprise meander stabilizing elements snaking upward in each case between two mutually adjoining mast elements.

3. Mast as claimed in claim 2, wherein the bottom meander stabilizing element engages onto a torsion bracing coupling the mast elements.

4. Mast as claimed in claim 1, wherein the stabilizing elements are arranged in the shape of a cross running outward from a cross piece between two mast elements and the cross piece is connected to a torsion bracing.

5. Mast as claimed in claim 1, wherein stabilizing elements converge between two mast elements to a cross beam arranged between the two mast elements.

6. Mast as claimed in claim 1, wherein mast elements are mutually connected by a torsion bracing comprising a cross beam and the stabilizing elements are connected to adjoining cross beams.

7. Mast as claimed in claims 1-6, provided with two or four mast elements.

8. Mast as claimed in claim 1, wherein the mast elements comprise two foundation mast elements and a floating mast element which support via shoring elements, and stabilizing elements which are connected between two torsion bracings to a foundation mast element and a floating mast element.

9. Mast as claimed in claims 1-8, wherein a traverse comprises two tubular traverse girders.

10. Mast as claimed in claims 1-8, wherein the traverse comprises a tubular traverse girder.

11. Traverse for a cable mast as claimed in claim 9 or 10.
